Europäisches Patentamt

European Patent Office

Office européen des brevets

(11) Publication number: **0 464 499 A2**

# EUROPEAN PATENT APPLICATION

(21) Application number: **91110188.9**

(22) Date of filing: **20.06.91**

(51) Int. Cl.5: **G02B 1/08**, G02B 5/02

(30) Priority: **22.06.90 JP 165248/90**

(43) Date of publication of application:
**08.01.92 Bulletin 92/02**

(84) Designated Contracting States:
**DE FR GB NL**

(71) Applicant: **SUMITOMO CHEMICAL COMPANY, LIMITED**
**5-33, Kitahama 4-chome Chuo-ku**
**Osaka(JP)**

(72) Inventor: **Ueda, Masahiro**
**9-17, Sakuragaoka-4-chome**
**Minoo-shi(JP)**
Inventor: **Kawamura, Kazumitsu**
**4-1-501, Kitajocho-2-chome**
**Toyonaka-shi(JP)**
Inventor: **Ohno, Tetsuro**
**9-1-502, Tamagawa-1-chome**
**Takatsuki-shi(JP)**
Inventor: **Takemura, Shinichi**
**2-40, Hirata-1-chome**
**Ibaraki-shi(JP)**

(74) Representative: **Henkel, Feiler, Hänzel & Partner**
**Möhlstrasse 37**
**W-8000 München 80(DE)**

(54) **Anisotropic light-scattering material, method for producing the same and lenticular lens for projection tv screen.**

(57) An anisotropic light-scattering material may be composed of transparent materials with anisotropic shapes regularly dispersed in a transparent matrix in a mutual positional relationship of parallel translation, which transparent materials with anisotropic shapes having a refractive index different from that of the transparent matrix. The anisotropic light-scattering materials exhibit a high scattering power in a direction perpendicular to the major axis or the longer edge of the transparent materials having anisotropic shapes, and therefore the light-scattering materials are useful as substituents for lenticular lenses for projection TV screens, and also as lampshades which require a sufficient light-scattering power.

## BACKGROUND OF THE INVENTION

### FIELD OF THE INVENTION

The present invention relates to an anisotropic light-scattering material capable of anisotropically scattering a transmitted light, a method for producing the same, and a lenticular lens for a projection TV screen comprising the above-mentioned anisotropic light-scattering material having the anisotropic scattering power.

### RELATED ART STATEMENT

It is desirable for a lenticular lens for a projection screen that the transmitted light-scattering behavior of a lens in the horizontal direction at the screen watchers' side should be different from that in the vertical direction. The lens is so designed that it has a high scattering power in the horizontal direction in order to provide a wide place where an image on the screen can be watched. As for the scattering power of a lens in the vertical direction, the lens is designed in such a way that the scattering power is generally middle or medium, because watchers usually watch an image while standing or sitting.

It is known a lenticular lens can be produced by a method wherein a plurality of cylindrical lenses are arranged in parallel in the longitudinal direction to give a high scattering power in the horizontal direction and wherein a filler is added to give a middle scattering power in the vertical direction.

According to prior arts, a lenticular lens is produced by an extrusion molding operation wherein the shape of the lens is adjusted by the adjustment of the shape of a extrusion die. The lenticular lens should have a precisely curved shape to exhibit a high light-scattering power. Therefore, in the production of a lens, it is necessary to exactly control manufacturing conditions. As mentioned above, known manufacturing methods require a high control operation, and therefore, it is not considered that the known method is suitable for the commercial production of a lens in view of production stability. Accordingly, it is highly desirable to provide a starting material from which a desired lens having satisfactory properties may be easily produced.

### SUMMARY OF THE INVENTION

The present invention provides an anisotropic light-scattering material comprising transparent materials with anisotropic shapes regularly dispersed in a transparent matrix in a mutual positional relationship of parallel translation, the transparent materials with anisotropic shapes having a refractive index different from that of the transparent matrix.

The present invention also provides a method for producing the anisotropic light-scattering material.

Furthermore, the invention provides a lenticular lens for a projection TV screen comprising the above-mentioned anisotropic light-scattering material.

### BRIEF EXPLANATION OF THE DRAWINGS

Fig. 1 shows a schematic view of an anisotropic light-scattering material obtained in Example 1.

Fig. 2 shows an explanatory view of an anisotropic light-scattering material, and also shows the planes where measurements are made about the scattered light.

Fig. 3 illustrates the transmitted light-scattering behavior in the plane perpendicular to the major axis of the dispersed particle described in Example 1.

Fig. 4 illustrates the transmitted light-scattering behavior in the direction parallel to the major axis of the dispersed particle described in Example 1.

Fig. 5 illustrates the transmitted light-scattering behavior in the plane perpendicular to the major axis of the dispersed particle described in Example 3.

Fig. 6 illustrates the transmitted light-scattering behavior in the plane parallel to the major axis of the dispersed particle described in Example 3.

Fig. 7 illustrates the transmitted light-scattering behavior described in Comparative Example 1.

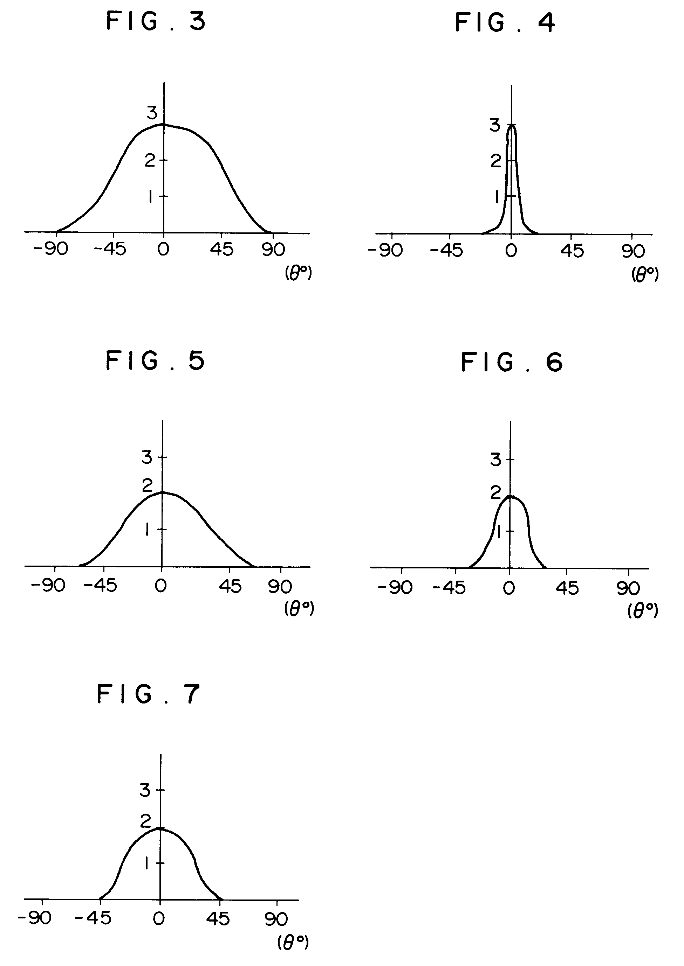

In Figs. 3 to 7, the ordinate represents the transmitted light-scattering power (relative value), and the abscissa represents the angle ($\theta$°).

### DETAILED DESCRIPTION OF THE INVENTION

2

The transparent matrix employed in the invention may be selected from the group consisting of various kinds of transparent materials. Examples of transparent materials for the matrix include olefinic resins such as polyethylenes, ethylene-propylene copolymers, ethylene-vinyl acetate copolymers and partially or wholly hydrolysed derivatives thereof, ethylene-ethyl acrylate copolymers, ethylene-methyl methacrylate copolymers, ethylene-vinyl acetate-methyl methacrylate copolymers, polypropylenes, and propylene-α-olefin copolymers; vinyl chloride type resins such as vinyl chloride resin; acrylonitrile resins such as acrylonitrile-styrene copolymers; styrene resins such as polystyrenes, and styrene-methyl methacrylate copolymers; acrylate resins such as polyethyl acrylates, methacrylate resins such as polymethylmethacrylates; (meth)acrylate copolymer resins such as copolymers of acrylates or methacrylates and optionally other copolymerizable substances; polyester resins such as polyethylene terephthalates; polyamide resins such as nylons; polycarbonate resins; cellulose resins such as ethyl celluloses, and acetyl celluloses; polyurethane resins; and silicone resins.

An explanation will be made about the transparent materials having anisotropic shapes, and also about a method for dispersing the transparent materials into the transparent matrix.

The transparent materials with anisotropic shapes have a refractive index different from that of the transparent matrix. In addition, the transparent materials with anisotropic shapes are compatible with the transparent matrix.

The difference in refractive index between the transparent matrix and the transparent materials with anisotropic shapes is at least 0.001, preferably at least 0.01.

The anisotropic shapes include, for instance, ellipsoids of revolution, prisms, intermediate shapes between ellipsoids and prisms, and columns. Preferred shapes are ellipsoids, prisms, and intermediate shapes between ellipsoids and prisms.

There are some requirements for shapes. Isotropic shapes are not allowable. On the other hand, highly irregular shapes are rather ineffective. The higher the anisotropic degree of the shapes is, the higher the anisotropic degree of transmitted light-scattering behavior will be. For instance, in the case of ellipsoids, the higher the length ration of the major axis to the minor axis is, the higher the anisotropic degree of light-scattering behavior will be. In the case of prisms, the higher the length ration of the longer side to the shorter side is, the higher the anisotropic degree of light-scattering behavior will be.

The particle size of transparent materials with anisotropic shapes is between 0.1 $\mu$m and 100 $\mu$m, preferably between about 0.5 $\mu$m and about 70 $\mu$m. The ratio of the maximum size to the minimum size is more than 1.

When a lenticular lens for a projection TV screen comprising an anisotropic light-scattering material is produced by employing the above-mentioned transparent materials with anisotropic shapes, the particle size of the transparent materials should preferably be between about 0.5 $\mu$m and about 70 $\mu$m, more preferably between 1 $\mu$m and 70 $\mu$m in order to increase the whole quantity of light transmitted and scattered. The ratio of the maximum size to the minimum size of the transparent materials should preferably be more than 10, more preferably between 15 and 30, in view of anisotropic scattering efficiency.

As the transparent materials with anisotropic shapes, it is possible to use various materials which are transparent as in the case of the matrix materials, with the proviso that the materials employed as the above-mentioned transparent materials with anisotropic shapes should have a refractive index different from that of the transparent matrix and should be compatible with the matrix.

The transparent materials with anisotropic shapes are preferably composed of organic materials such as resins mentioned above, although the transparent materials may also be composed of inorganic materials. For instance, use may be made of fillers, pigments and fibers. The above-mentioned resins are more preferred.

It is an essetial feature of the invention that the transparent materials having anisotropic shapes are regularly dispersed in the transparent matrix in a mutual positional relationship of parallel translation. For instance, ellipsoids of revolution should be arranged so as to hold their major axes in the same direction. In the case of prisms, they should be arranged so as to hold the corresponding edges of the prisms in the same direction.

There is a known method for regularly arranging of the transparent materials having anisotropic shapes, wherein the transparent materials with anisotropic shapes are mingled with a transparent polymeric compound and the resulting composition is formed into a film or sheet, which is then subjected to a uniaxial stretching operation. However, this method lacks a sufficient production stability, and therefore is not suitable for the commercial production.

The present inventors have made many studies about the production of the desired products, and have now found a novel method which is very useful in view of the technology.

The novel method according to the invention comprises the steps of:

mingling or kneading at least two resins with each other to obtain a composition, at least said two resins having different refractive indexes and being of phase separation type capable of forming a matrix as well as anisotropic shaped materials;

subjecting the composition to an extruding operation, and unixially stretching the extruded product.

The dispersed particles, which have been formed as "islands" in the kneading step of the present method, have isotropic globular forms. In the stretching step, the isotropic particles are deformed into anisotropic ellipsoids of revolution, each of which has the major axis laid along the stretching direction. Thus, the anisopic particles are regularly dispersed into the matrix in such a way that the particles are regularly arranged in the mutual positional relationship of parallel translation.

The degree of anisotropy in the anisotropic shaped materials depends on the discharge amount from the extrusion die and on the pulling speed in the stretching operation. Accordingly, the degree of anisotropy may be varied by suitably changing such operational conditions.

Examples of the stretching operations include inflation operations and T-die operations. Preferred are T-die operations, in view of operational conditions.

As the resin compositions employed according to the invention, it is possible to use a resin composition comprising at least two resins having a high transparency and different refractive indexes, with the proviso that these resins are of phase separation type.

For instance, it is preferred to knead an olefinic resin component including polyethylenes, ethylene-propylene copolymers, ethylene-vinyl acetate copolymers and wholly or partially hydrolysed derivatives thereof, ethylene-ethyl acrylate copolymers, ethylene-methyl methacrylate copolymers, ethylene-vinyl acetate-methyl methacrylate copolymers, and polypropylenes, propylene-$\alpha$-olefin copolymers, together with another resin component including vinyl chloride type resins such as polyvinyl chloride resins; acrylonitrile resins such as acrylonitrile-styrene copolymers; styrene resins such as polystyrenes and styrene-methyl methacrylate copolymers; acrylate polymers such as polyethyl acrylates; methacrylate polymers such as polymethyl methacrylate polymers; (meth)acrylate resins such as (meth)acrylate copolymers optionally containing other copolymerizable monomeric substances, polyester resins such as polyethylene terephthalates; polyamide resins such as nylons; polycarbonate resins; cellulose resins such as ethyl celluloses and acetyl celluloses; polyurethane resins; and silicone resins.

As olefinic resins, use is preferably made of low density polyethylenes, more preferably very low density polyethylenes.

As the resins to be kneaded together with olefinic resins, it is preferred to use styrene resins such as polystyrenes. Polystyrenes having a molecular weight of at most 140,000 are more preferred.

The weight ratio of these two resin components to be used is between 95/5 and 5/95, preferably between 70/30 and 30/70.

For the production of lenticular lenses for projection TV screens, it is recommended that the matrix resins comprise very low-density polyethylenes, and that the transparent materials having anisotropic shapes comprise polystyrenes preferably having a molecular weight of at most 140,000. These two resins are mingled together in a ratio as mentioned above.

The anisotropic light-scattering materials according to the invention exhibit a high scattering power in a direction perpendicular to the major axis or the longer edge of the transparent materials having anisotropic shapes, and therefore the light-scattering materials are useful, for instance, as substituents for lenticular lenses for projection TV screens, and also as lamp-shades which require a sufficient light-scattering power.

The manufacturing method according to the invention may be easily carried out with high production stability, so that the method is suitable for the commercial production.

The present invention will be explained in more detail with the following Examples. However, it should be noted that the scope of the invention is not limited only to the Examples.

Example 1

60 Parts by weight of a very low-density polyethylene having a density of 0.90 and a refractive index of 1.54 were kneaded together with 40 parts by weight of a polystyrene having a molecular weight of 95,000 and a refractive index of 1.59, to prepare a phase separation type resin composition having "a island/ocean structure", wherein the polyethylene was present as the matrix and the polystyrene was present as the globular particles ("islands") dispersed in the matrix. The phase separation type resin composition was subjected to an extruding operation using an extruder provided with a T-die having a die clearance of 0.7 mm at a melt temperature of 240° C. The extruded molten resin having a form of sheet was cooled while applying a high stretching force to the resin sheet by pulling the sheet in the direction of extrusion at a speed of 15 m/minute to obtain a film with a thickness of 50 $\mu$m as a desired anisotropic light-scattering material according to the invention.

The dispersed globular polystyrene particles, which were initially present as the islands in the island/ocean structure, were deformed in the stretching step into the anisotropic ellipsoidal shape having the major axis laid along the stretching direction. Thus, the anisotropic ellipsoidal particles were uniformly distributed in the matrix in a mutual positional relationship of parallel translation.

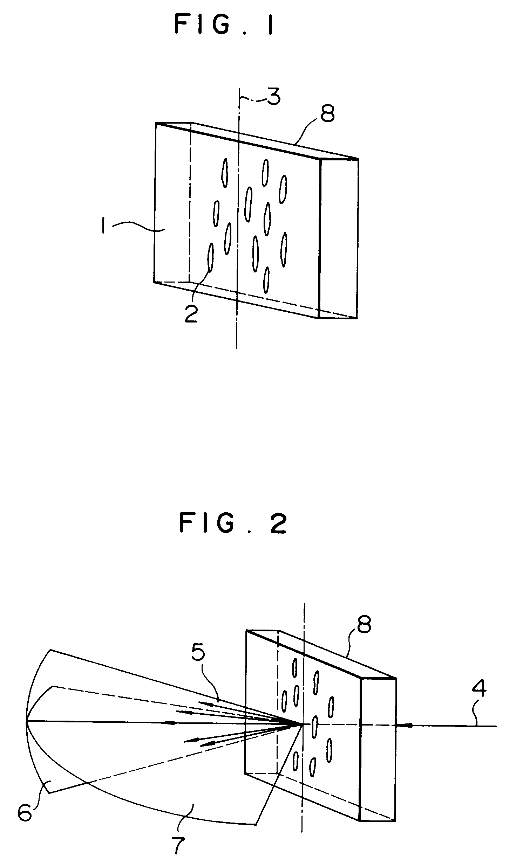

The major axis of each anisotropic ellipsoidal particle had a length of about 20 $\mu$m, while the minor axis had a length of about 1 $\mu$m. The film thus produced and the anisotropic particles dispersed therein are illustrated in Fig. 1.

Fig. 1 shows a schematic view of an anisotropic light-scattering material 8, which contains anisotropic ellipsoidal particles 2 dispersed in a matrix resin 1. The major axis of each dispersed particle 2 is parallel to the MD direction 3 taken in the stretching operation.

The transmitted light-scattering behavior of this film is illustrated in Fig. 2. A vertical incident light 4 enters the anisotropic light-scattering material 8, wherein the light is scattered in the planes 6 and 7 where the scattered light beams 5 pass forwards as shown in Fig. 2, the plane 6 being parallel to the major axis, and the plane 7 being perpendicular to the major axis.

Fig. 3 illustrates transmitted light-scattering behavior in the plane perpendicular to the major axis of the dispersed particle. Fig. 4 illustrates the light-scattering behavior in the plane parallel to the major axis. As shown in these figures, the transmitted light is highly scattered in the plane perpendicular to the major axis of the dispersed particle, whereas the light-scattering power in the plane parallel to the major axis is low. Thus, there was observed a high anisotropy in the light-scattering behavior of the material 8 according to the invention.

Example 2

The procedures of Example 1 were repeated by employing the same composition as in Example 1, except that the melt temperature of the composition was 190° C instead of 240° C, that the T-die clearance of the extruder was 0.9 mm instead of 0.7 mm and that the pulling speed for stretching was 20 m/minute instead of 15 m/minute.

A film with a thickness of 50 $\mu$m was obtained as the anisotropic light-scattering material. The major axis of each anisotropic particle dispersed in the matrix had a length of about 50 $\mu$m, while the minor axis had a length of about 2 $\mu$m. It was observed that the anisotropic light-scattering material obtained in Example 2 had an anisotropic light-scattering power similar to that of the light-scattering material shown in Example 1.

Example 3

The procedures of Example 1 were repeated, except that 60 parts of a very low density polyethylene having a density of 0.90 and a refractive index of 1.54 were used together with a styrene-acrylonitrile copolymer having a refractive index of 1.56.

A film having a thickness of 50 $\mu$m was obtained, which was an anisotropic light-scattering material according to the invention having an island/ocean structure wherein the island part was composed of the ellipsoids of revolution consisting of the styrene-acrylonitrile copolymer. Each ellipsoid had the major axis laid along the stretching direction. In the anisotropic light-scattering material obtained, the ellipsoids were present as homogeneously dispersed particles in a mutual positional relationship of parallel translation. The major axis of each ellipsoid had a length of about 10 $\mu$m, whereas the minor axis had a length of about 1 $\mu$m.

Fig. 5 shows the transmitted light-scattering behavior in the plane perpendicular to the major axis of the dispersed particle mentioned above, and Fig. 6 shows the scattering behavior in the plane parallel to the major axis of the particle. Fig. 5 reveals a high scattering power, whereas Fig. 6 reveals a middle scattering power. Thus, there was observed an anisotropy in the light-scattering behavior. By comparing the light-scattering material obtained in Example 3 with that in Example 1, it will be seen that the degree of anisotropy in the light-scattering behavior may be easily adjusted by an adjustment of the particle shape.

Comparative Example 1

50 Parts by weight of crosslinked polystyrene microbeads having a size of about 10 $\mu$m and a refractive index of 1.59 were dispersed into 100 parts by weight of a very low density polyethylene having a density of 0.90 and a refractive index of 1.54 and subjected to a compression molding operation to form a film with a thickness of about 50 $\mu$m.

In the case of this film, it was observed that the transmitted light was scattered at all the planes perpendicular to the film surface in such a way as shown in Fig. 7. Thus, there was observed no anisotropy in this film.

Example 4

An experiment was conducted wherein the screen part of a commercial 40 inches-projection TV was replaced by an anisotropic light-scattering material obtained in Example 1 or 2. Furthermore, measurements were made about the maximum luminance of image and about the angle of visual field having a luminance higher than 10% of the maximum luminance. The results are shown in Table 1. The luminance was measured according to a method described in JIS C-7614 by employing a commercial luminance meter "LS-100" manufactured by Minoruta Co. Ltd., Japan.

## Table 1

| Sample (Ex. No.) | Max. luminance (Relative value) | Angle of visual field | |
|---|---|---|---|
| | | Horizontal direction | Vertical direction |
| Example 1 | 1.0 | 95° | 35° |
| Example 2 | 1.2 | 90° | 35° |

Comparative Example 2

The procedures of Example 4 were repeated, except that use was made of a known lenticular lens which was for a 40 inches-projection TV manufactured by Toshiba Co., Ltd., Japan. The results are shown in Table 2.

## Table 2

| Sample (Ex. No.) | Max. luminance (Relative value) | Angle of visual field | |
|---|---|---|---|
| | | Horizontal direction | Vertical direction |
| Known lenticular lens | 1.0 | 90° | 35° |

**Claims**

1. An anisotropic light-scattering material, comprising transparent materials with anisotropic shapes regularly dispersed in a transparent matrix in a mutual positional relationship of parallel translation, the transparent materials with anisotropic shapes having a refractive index different from that of the transparent matrix.

2. An anisotropic light-scattering material according to claim 1, wherein the difference in refractive index between the transparent matrix and the transparent materials having anisotropic shapes dispersed in the matrix is at least 0.001.

3. An anisotropic light-scattering material according to claim 2, wherein the difference in refractive index between the transparent matrix and the transparent materials having anisotropic shapes dispersed in the matrix is at least 0.01.

4. An anisotropic light-scattering material according to claim 1, wherein the transparent materials with anisotropic shapes have a particle size of 0.1 to 100 $\mu$m, with the proviso that the ratio of the maximum size to the minimum size is higher than 1.

5. An anisotropic light-scattering material according to claim 1, wherein the transparent matrix and the transparent materials with anisotropic shapes are individually composed of a resin selected from the group consisting of olefinic resins, styrene resins, (meth)acrylate resins, polyester resins and cellulose resins.

6. A method for preparing an anisotropic light-scattering material according to claim 1, wherein a phase separation type composition comprising at least two resins is subjected to a stretching operation, with the proviso that the resins are capable of forming a matrix and an anisotropic shaped material, respectively, and have different refractive indexes.

7. A method for preparing an anisotropic light-scattering material according to claim 6, wherein a T-die is used in the stretching operation.

8. A method for preparing an anisotropic light-scattering material according to claim 6, wherein the resin composition comprises an olefinic resin and a styrene resin.

9. A method for preparing an anisotropic light-scattering material according to claim 8, wherein the olefinic resin is a low density polyethylene.

10. A method for preparing an anisotropic light-scattering material according to claim 9, wherein the olefinic resin is a very low density polyethylene.

11. A method for preparing an anisotropic light-scattering material according to claim 8, wherein the styrene resin is a polystyrene.

12. A method for preparing an anisotropic light-scattering material according to claim 6, wherein the ratio of the matrix-forming resin to the anisotropic shaped material-forming resin is between 95/5 and 5/95.

13. A method for preparing an anisotropic light-scattering material according to claim 12, wherein the ratio of the matrix-forming resin to the anisotropic shaped material-forming resin is between 70/30 and 30/70.

14. A lenticular lens for a projection TV screen comprising an anisotropic light-scattering material which contains a transparent matrix and transparent materials with anisotropic shapes regularly dispersed in the transparent matrix in a mutual positional relationship of parallel translation, the transparent materials with anisotropic shapes having a refractive index different from that of the transparent matrix and having a particle size of 0.5 to 70 $\mu$m, with the proviso that the ratio of the maximum size to the minimum size is higher than 10.

15. A lenticular lens for a projection TV screen according to claim 14, wherein the transparent materials with anisotropic shapes have a particle size of 1 to 70 $\mu$m with the proviso that the ratio of the maximum size to the minimum size is between 15 and 30.

16. A lenticular lens for a projection TV screen according to claim 14, wherein the matrix resin comprises a very low density polyethylene, and the transparent materials with anisotropic shapes comprise a

polystyrene.

EP 0 464 499 A2

# FIG. 1

# FIG. 2

FIG . 3

FIG . 4

FIG . 5

FIG . 6

FIG . 7